# EUROPÄISCHE PATENTANMELDUNG

(11) **EP 4 595 762 A1**
(43) Veröffentlichungstag der Anmeldung: **06.08.2025**
(21) Anmeldenummer: 24154627.4
(22) Anmeldetag: 30.01.2024
(51) Int. Cl.: A23B 4/044, A23B 4/052, B01J 19/10

(54) **VERFAHREN UND VORRICHTUNG ZUR REIFUNG VON ROHWURST UND/ODER ROHSCHINKEN**

(71) Anmelder: Oltmer Food Corporation GmbH, 26188 Edewecht (DE)
(72) Erfinder: OLTMER, Jürgen, 26188 Edewecht (DE)
(74) Vertreter: Ellberg, Nils

(57) **Zusammenfassung**

Die Erfindung betrifft eine Vorrichtung und ein Verfahren zur Reifung von Rohwurst und/oder Rohschinken, wobei das zu reifende Produkt, insbesondere Rohwurst und/oder Rohschinken, in einen Reiferaum verbracht und dort über eine vorgegebene Zeit zu vorgegebenen Bedingungen gereift wird, wobei wenigstens die Temperatur und die relative Luftfeuchtigkeit im Reiferaum für die Zeit der Reifung des Produkts im Reiferaum gesteuert und/oder geregelt wird.

Erfindungsgemäß ist vorgesehen, dass dem Reiferaum während des Reifeprozesses Aerosole zur Erzielung der zur Reifung vorgegebenen (relativen) Luftfeuchtigkeit zugeführt werden.

## Beschreibung

Die Erfindung betrifft ein Verfahren zur Reifung von Rohwurst und/oder Rohschinken, wobei das zu reifende Produkt, insbesondere Rohwurst und/oder Rohschinken, in einen Reiferaum verbracht und dort über eine vorgegebene Zeit zu vorgegebenen Bedingungen gereift wird, wobei wenigstens die Temperatur und die relative Luftfeuchtigkeit im Reiferaum für die Zeit der Reifung des Produkts im Reiferaum gesteuert und/oder geregelt wird, gemäß dem Oberbegriff des Anspruchs 1.

Ferner betrifft die Erfindung eine entsprechende Vorrichtung gemäß dem Oberbegriff des Anspruchs 6.

Die Produktion von Rohwurst gilt als einer der komplexesten Prozesse in der Fleischerzeugnisproduktion, wobei ein hohes Maß an Sicherheit und Qualität bei ordnungsgemäßer Herstellung und Handhabung erreicht wird. Ein entscheidendes Merkmal der Rohwurstherstellung ist, dass keine thermische Behandlung bei Temperaturen über 35 °C stattfindet. Höhere Temperaturen können zu Denaturierung und Aromabeeinflussung führen, was sich in Farbveränderungen und einer Überbetonung des Säurecharakters durch vermehrte Milchsäurebildung äußert.

Bei der konventionellen Herstellung von Rohwurst wird die Reifetemperatur sorgfältig ausgewählt. Während Temperaturen um die 30 °C zu schlecht aromatisierten, stark gesäuerten Produkten führen können, ermöglichen niedrigere Temperaturen zwischen 15 und 20 °C eine bessere Aromatisierung. In einigen Fällen werden sogar Temperaturen zwischen 5 und 10 °C verwendet, insbesondere bei der Verwendung von Nitrat als Konservierungsmittel.

Die Herstellung von Rohwursterzeugnissen beruht auf verschiedenen internen und externen Parametern. Zu den internen Parametern gehören unter anderem die Rohware, wie die Tierart, Qualität, mikrobiologischer Status, Fettgehalt, Wuchs- und Nährstoffe, der Ausgangs a_{w}-Wert und pH-Wert, die Zusammensetzung der Funktionsmischung, die Salzzugabe, Nitrat-/Nitritgehalt, die Art und Menge der Gewürze, die verwendete Starterkultur, der Zerkleinerungsgrad von Fleisch und Fett, die Art der Zerkleinerung, das Kaliber der Wurst und die Verarbeitungstemperatur im Kutter. Externe Parameter umfassen die Umgebungstemperatur, relative Luftfeuchtigkeit, Luftbewegung, Reifezeit, Rauchzugabe und gegebenenfalls die Behandlung mit Schimmelpilzkultur.

Zusätzlich können durch den Einsatz von Biofermenten als Schutz- oder Starterkulturen weitere wichtige Aspekte wie Farbe, Geschmack, Umrötung, Festigkeit, Unterdrückung von unerwünschten Bakterien, pH-Reduzierung, Katalase, Schnelligkeit, Abtrocknung und Milchsäurebildung beeinflusst werden.

Derzeit vollzieht man den Reifeprozess in der Regel mithilfe sog. Reifeschränken bzw. Reifekammern als Reiferäumen, die u. a. sowohl die Temperatur (z. B. 30 °C), die Zeit (z. B. 20 Tage) und die rel. Luftfeuchte und gegebenenfalls weitere Faktoren steuern. Eine präzise Steuerung und Überwachung von Trocknungsintensität, Oberflächenfeuchte, ggf. Rauchkonzentration und Temperatur sind Voraussetzungen für qualitativ hochwertige Produkte auf reproduzierbarem Niveau.

Die relative Luftfeuchte im Reifeschrank wird nach dem aktuellen Stand der Technik auf ein Niveau von z. B. 80 % relativer Luftfeuchtigkeit mittels Verdampfer eingestellt, so dass im Prozess nicht durchgängig eine Gleichgewichtsfeuchte eingehalten wird. Zwar wird oftmals behauptet, dass sich auch mittels Verdampfer höhere Luftfeuchtigkeiten erzielen lassen bzw. in der Steuerung entsprechender Anlagen vorgegeben sind. Tatsächlich ist dies jedoch physikalisch mittels Verdampfer nicht möglich und wird in der Praxis auch nicht erreicht.

Der gesamte Reifungsprozess sollte idealerweise an die biologischen Veränderungen während der Fleischreifung angepasst sein (u. a. Fermentationsreaktionen, pH-Änderungen, Wasserabgabe bzw. Masseverluste) und wird daher durch veränderliche und spezifische Wärme- und Stofftransportvorgänge charakterisiert, sodass u. a. unterschiedliche Temperaturen, Zeiten und relative und absolute Luftfeuchtigkeiten zu berücksichtigen sind (z. B. Trocknung). Insgesamt ist die Technologie des Reifevorgangs in unerwünschter Weise und technisch durch partielle Ungleichgewichtssituationen bestimmt, auf die nachfolgend noch eingegangen wird.

Ein zentraler Vorgang während der Reifezeit ist der Wasserentzug. Er liegt oftmals bei < 30 % bezogen auf das Ausgangsgewicht. Werden z. B. 10 kg Produkt eingesetzt, verliert dieses Produkt während der Reifung 3,0 kg Wasser. Das Wasser muss in einer definierten Zeit mit einer bestimmten Kinetik entzogen werden.

Die herkömmliche Reifetechnik nach dem Stand der Technik vermeidet z. B. nicht, dass der Wassergehalt in einer ausgereiften Salami ungleichmäßig verteilt ist. Es können zwischen den Randschichten und dem Inneren, dem Kern der Wurst, Unterschiede von 16 bis 20 % vorkommen. Weitere Ungleichgewichte bestehen, da der Zusammenhang von a_{w}-Wert einer Rohwurst und der relativen Luftfeuchte in der Umgebung des Reiferaums, z. B. einer Reifekammer, zu wenig erkannt wird. Der a_{w}-Wert gibt Auskunft über das frei verfügbare Wasser in der Rohwurst (Wasseraktivität). Bei bestimmten a_{w}-Werten kann eine Aussage über die mikrobiologische Stabilität des Produktes getroffen werden. In der Folge treten Desorptionen namentlich in den Randschichten der Wurst auf, was u. a. den Verlust an Wärmeleitfähigkeit der Ware provoziert und damit energetische, zeitliche und vor allem qualitative Nachteile generiert.

Der Umstand, dass im Reifeprozess die Regelung des Taupunktes nicht vorgenommen wird, um vor allem Kondensationen zu vermeiden, ist ein weiteres Problem, dessen Lösung insbesondere zur Beherrschung der Prozess-Hygiene notwendig ist.

Ein Nachteil der aus dem Stand der Technik bekannten Verfahren und Vorrichtungen kann also darin gesehen werden, dass produktunspezifische Prozessabläufe zu Ungleichgewichtssituationen führen, mit der Folge von Nachteilen primär in der Produktqualität bei einem zu hohen zeitlichen und energetischen Aufwand (hoher CO₂-Foot-Print), verbunden mit überhöhten Hygiene-Risiken im Prozess und bei Produkten.

Hiervon ausgehend liegt der Erfindung die Aufgabe zu Grunde, Verfahren und Vorrichtungen der eingangs genannten Art weiterzuentwickeln, insbesondere im Hinblick auf eine zeitliche und/oder energetische und/oder hygienische Optimierung des Prozesses.

Ein erfindungsgemäßes Verfahren zur Lösung dieser Aufgabe weist die Merkmale des Anspruchs 1 auf. Es ist demnach vorgesehen, dass dem Reiferaum während des Reifeprozesses Aerosole zur Erzielung der zur Reifung vorgegebenen (relativen) Luftfeuchtigkeit zugeführt werden.

Statt wie im Stand der Technik wird demnach kein Wasserdampf in den Reiferaum geleitet, sondern ein Aerosol, vorzugsweise auf Wasserbasis, insbesondere aus Wasser.

Ein wesentlicher Vorteil dieser Methode kann darin bestehen, dass für die Erzeugung der Aerosole sehr viel weniger Energie benötigt wird als für die Herstellung von Wasserdampf. Erste Versuche lassen davon ausgehen, dass auf diese Weise die zur Reifung der Produkte benötigte Energie um etwa 30 bis 50 % gesenkt werden kann.

Der elektrische Leistungsbedarf ist insbesondere im Falle des Einsatzes von Ultraschall-Generatoren im Vergleich niedrig (1 - 5 W pro kg/h). Hinzu kommt, dass mit diesen Geräten der Befeuchtungsgrad bis nahezu 100 % gelingt, wohingegen andere Befeuchter etwa 85 - 95 % relative Luftfeuchte generieren können.

Mit anderen Methoden, beispielsweise durch Einsatz von Hochdruckbefeuchtern, ließe sich ebenfalls eine vergleichsweise hohe relative Luftfeuchtigkeit realisieren, jedoch benötigen solche Systeme sehr hohe Wasservordrücke, die energetisch aufwändig realisiert werden müssten und somit nicht zur gewünschten Energieeinsparung führen können.

Die bisher übliche Zuführung von Feuchtigkeit mittels Wasserdampfs hatte ferner den Nachteil, dass nach dem Einbringen des Wasserdampfs ein Kühlschritt vorgesehen werden musste, um die für die Reifung der Produkte vorgesehene Temperatur wieder herzustellen. Hierdurch ergaben sich sehr hohe Schwankungen in der relativen Luftfeuchtigkeit, wodurch Wasser an der Oberfläche der Produkte und an Wänden des Reiferaums kondensiert. Dies ist nicht nur energetisch von Nachteil, sondern bringt auch hygienische Probleme mit sich.

Bei dem Einbringen von Aerosolen entstehen solche Schwankungen hingegen nicht, sodass sich die relative Luftfeuchtigkeit und Temperatur sehr genau steuern lässt. Da der im Stand der Technik immer wieder notwendige Kühlprozess vermieden wird, ist eine genauere Prozesssteuerung möglich.

Um den Vorteil der erfindungsgemäßen Lösung verdeutlichen zu können, werden nachfolgend zwei Steuerungsprogramme tabellarisch dargestellt:

| Schritt | Bezeichnung | T (°C) | rel. Luftf. % | Frischluft % | Umluft % | Zeit (Std.) |
|---|---|---|---|---|---|---|
| 1 | Klima ohne Feuchte | 24 | 94 | 0 | 50 | 5:00 |
| 2 | Klimatisieren | 24 | 94 | 0 | 50 | 12:00 |
| 3 | Räuchern | 24 | 94 | 0 | 60 | 0:30 |
| 4 | Klimatisieren | 24 | 94 | 0 | 50 | 12:00 |
| 5 | Räuchern | 23 | 93 | 0 | 50 | 0:30 |
| 6 | Klimatisieren | 23 | 93 | 0 | 50 | 12:00 |
| 7 | Räuchern | 23 | 93 | 0 | 60 | 0:30 |
| 8 | Frischluft auto | 21 | 90 | 10 | 50 | 12:00 |
| 9 | Räuchern | 21 | 90 | 0 | 60 | 0:30 |
| 10 | Frischluft auto | 20 | 90 | 10 | 100 | 12:00 |
| 11 | Räuchern | 20 | 90 | 0 | 60 | 1:00 |
| 12 | Frischluft auto | 18 | 88 | 10 | 100 | 11:00 |
| 13 | Räuchern | 18 | 88 | 0 | 60 | 1:00 |
| 14 | Frischluft auto | 18 | 88 | 10 | 100 | 23:00 |
| 15 | Räuchern | 18 | 86 | 0 | 60 | 1:30 |
| 16 | Frischluft auto | 18 | 84 | 10 | 100 | 23:00 |
| 17 | Räuchern | 16 | 84 | 0 | 60 | 1:30 |
| 18 | Frischluft auto | 16 | 82 | 10 | 100 | 99:59 |

In der obigen Tabelle ist ein aus dem Stand der Technik bekanntes Programm für eine Standard-Salami dargestellt. Da der überwiegende Anteil vom Verarbeitungsfleisch im Rohwurstbereich gefroren ist, liegt die Temperatur der Rohwurstmasse nach dem Füllen bei 0 °C bis -4 °C. Daher erfolgt in Schritt 1 eine Angleichphase. In Schritt 3 erfolgt ein frühzeitiges Räuchern der Ware, um dem Wachstum von Hefen und Schimmelpilzen vorzubeugen. Das Räuchern kann täglich wiederholt werden. In Schritt 8 beginnt die Trocknung der Ware in Abhängigkeit vom pH-Wert.

Das Klimatisieren dient der Steuerung fest vorgegebener Parameter wie Temperatur, relativer Luftfeuchtigkeit, Frischluftöffnung etc. unter Zuhilfenahme aller zur Verfügung stehenden Medien. Das heißt Heizen - Kühlen - Trocknen - Befeuchten.

Die Funktion der Frischluftautomatik ermöglicht es, bei geeigneten Außenverhältnissen (kontinuierliche Überprüfung der Temperatur und Enthalpie) die Frischluft zum Trocknen oder zum Kühlen dem Kühlregister vorzuziehen.
- Bei steigender Kammerfeuchte wird die Frischluftzufuhr geöffnet.
- Bei abfallender Kammerfeuchte wird die Frischluftzufuhr geschlossen.

Der Prozess läuft automatisch und wird von der programmierten Steuerung vorgegeben.

Die nachfolgende Tabelle zeigt ein entsprechendes Programm unter erfindungsgemäßer Verwendung von Aerosolen statt Wasserdampf:

| Schritt | Bezeichnung | T (°C) | rel. Luftf. % | Frischluft % | Umluft % | Zeit (Std.) |
|---|---|---|---|---|---|---|
| 1 | Klima ohne Feuchte | 24 | 94 | 0 | 50 | 0:00 |
| 2 | Klimatisieren | 24 | 94 | 0 | 20 | 12:00 |
| 3 | Räuchern | 24 | 94 | 0 | 60 | 0:00 |
| 4 | Klimatisieren | 24 | 94 | 0 | 20 | 12:00 |
| 5 | Räuchern | 23 | 93 | 0 | 60 | 0:30 |
| 6 | Klimatisieren | 23 | 93 | 0 | 20 | 12:00 |
| 7 | Räuchern | 23 | 93 | 0 | 60 | 1:00 |
| 8 | Frischluft auto | 21 | 90 | 10 | 60 | 12:00 |
| 9 | Räuchern | 21 | 90 | 0 | 60 | 0:00 |
| 10 | Frischluft auto | 20 | 90 | 10 | 60 | 12:00 |
| 11 | Räuchern | 20 | 90 | 0 | 60 | 1:00 |
| 12 | Frischluft auto | 18 | 88 | 10 | 60 | 11:00 |
| 13 | Räuchern | 18 | 88 | 0 | 60 | 1:00 |
| 14 | Frischluft auto | 18 | 88 | 10 | 60 | 23:00 |
| 15 | Räuchern | 18 | 86 | 0 | 60 | 1:30 |
| 16 | Frischluft auto | 18 | 84 | 10 | 60 | 23:00 |
| 17 | Räuchern | 16 | 84 | 0 | 60 | 1:30 |
| 18 | Frischluft auto | 16 | 82 | 10 | 60 | 99:59 |

Es zeigt sich, dass die Angleichphase in Schritt 1 in der Regel vermieden werden kann. Durch die feinsten Partikel der Aerosole werden die Prozesszeiten durch bessere Wärmeübertragung verkürzt und ein Erwärmen der Ware aus dem Taupunktbereich ist nicht notwendig. Darüber hinaus wird ein unnötiges Kondensieren zugefügter Luftfeuchte über die Aerosole auf der Darmoberfläche vermieden bzw. stark reduziert.

Ferner ist ein frühzeitiges Räuchern in Schritt 3 nicht mehr zwingend notwendig.

Darüber hinaus tragen die Aerosole zur massiven Erhöhung bzw. Verbesserung der Wärmeleitfähigkeit bei und ermöglichen eine schnellere Angleichung der Temperatur im Produkt an die Temperatur im Reiferaum. Somit wird der Reifebeginn beschleunigt und die z. B. Microkokken oder Staphylokokken können die sog. Umrötephase und Geschmacksausbildung schneller starten.

Ein weiterer Vorteil durch den Einsatz von Aerosolen ergibt sich durch den Abtransport von Feuchtigkeit von der Oberfläche der Produkte. Dies führt zu kontrollierter Abtrocknung und erheblich besserer Prozesssteuerung.

Es hat sich ferner gezeigt, dass der Einsatz von Aerosolen statt Wasserdampf zu einer Reduzierung des Wasserverbrauchs des Verfahrens führt. Ferner kann auch auf den Einsatz von kostenintensiver Druckluft verzichtet werden, wie sie bei anderen Verfahren notwendig wäre.

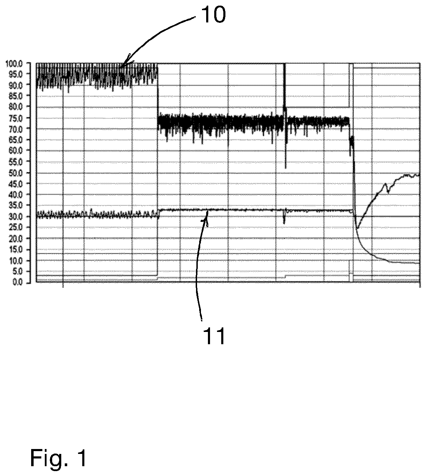

Fig. 1 zeigt ein dem Stand der Technik entsprechendes Reifeprogramm. Über die Zeitachse (X-Achse) sind dabei die relative Luftfeuchtigkeit 10 und die Temperatur 11 im Reiferaum aufgetragen.

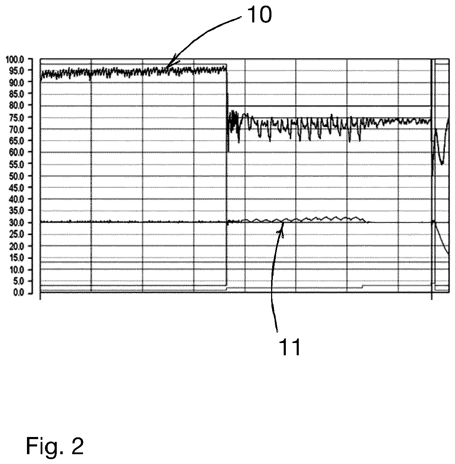

Fig. 2 zeigt im Vergleich hierzu ein der Erfindung entsprechendes Reifeprogramm. Es fällt dabei auf, dass sowohl bei der relativen Luftfeuchtigkeit 10 als auch bei der Temperatur 11 deutlich geringere Schwankungen auftreten als beim Stand der Technik (Fig. 1).

Im Hinblick auf die Klimatisierung sind folgende Vorteile gegenüber dem Stand der Technik zu nennen:
Das Klimatisieren dient der Steuerung fest vorgegebener Parameter wie Temperatur, relative Luftfeuchtigkeit, Frischluftöffnung etc. unter Zuhilfenahme aller zur Verfügung stehenden Medien. Das heißt, Kühlen und Befeuchten über Wasserdampf ist nicht notwendig. Weiterhin entfällt das Einbringen vom Wasserdampf über Druckluft.

Durch das Einbringen von Aerosolen beim Fermentationsprozess wird der Taupunkt verschoben und auf eine Angleichphase im Schritt 1 kann verzichtet bzw. verkürzt werden.

Wenn derart kalte frisch gefüllte Rohwürste sofort in die Klimaanlage verbracht werden und nach dem Start der Anlage im ersten Schritt eine Temperatur von z. B. 24 °C und einer relativen Luftfeuchtigkeit von 94 % eingestellt werden, entsteht nur noch geringfügig ein sogenanntes Mikroklima. Durch die schnelle Wärmeübertragung von der Kammertemperatur über die Aerosole in das zu fermentierende Produkt stellt sich die Temperatur sehr schnell gleichmäßig ein. Ein Auskondensieren über die Darmoberfläche wird zum größten Teil vermieden, da die Feinstpartikel der Feuchtigkeit physikalisch nicht dazu neigen.

Es kommt somit nicht zur Taupunktunterschreitung des aktuellen Kammerklimas, worauf die überschüssige Luftfeuchte als Kondensat nicht auf der Darmoberfläche niederschlägt und zu Boden tropft. Eine Wassererhöhung im Außenbereich des Produktes ist somit zu vermeiden und stellt einen weiteren positiven Effekt dar, wie z. B. Salzauswaschung unter der Darmoberfläche (Farbprobleme) werden vermieden, mangelnde mikrobiologische Qualität (beschlagene Ware) wird vermieden, erhöhter Energieaufwand beim Abtrocknen der Ware wird vermieden. Die energieaufwendige Angleichphase kann zum Teil vermieden werden und der eigentliche Fermentationsprozess kann vorzeitig, zum Vorteil der Prozess- und Produktführung, gestartet werden.

Im Hinblick auf den Reifeverlauf sind folgende Vorteile gegenüber dem Stand der Technik zu nennen:
Die eigentliche Trocknung basiert nach abgeschlossener Fermentation, in der Regel ist der isoelektrische Punkt (pH-Wert 5,3) der entscheidende Parameter, auf einer permanenten Feuchtedifferenz zwischen dem aktiven Wasser des Produktes und der relativen Kammerfeuchte. Auch hier wird durch die Wasserabgabebereitschaft der Ware die Kammerfeuchte permanent ansteigen, wodurch zur Regelung lediglich die Frischluft benötigt wird.

Hier diffundiert die Feuchtigkeit der Ware vom Kern in den Randbereich zur Oberfläche, wird dort durch den feinen Nebel der Aerosole abgenommen und steigert somit die rel. Luftfeuchtigkeit in der Kammer.

Durch die geringe Tröpfchengröße der Aerosole ist eine Feuchtigkeitsaufnahme an der Oberfläche wesentlich besser möglich, da der Wasserdampf durch seinen Zustand bzw. seiner Tröpfchengröße immer wieder zum Auskondensieren neigt.

Über eine sogenannte Frischluftautomatik wird dann die rel. Luftfeuchtigkeit immer wieder angepasst, so dass der vorgegebene Sollwert immer wieder von dem tatsächlich in der Kammer vorhandenen Wert der rel. Luftfeuchtigkeit angenähert wird. Leichte Peaks in der graphischen Darstellung werden sichtbar, jedoch bleibt die eingestellte Temperatur in der Kammer annähernd gleichmäßig.

Die Wasseraktivität (a_{w}-Wert) bestimmt das genaue Verhältnis von Luftfeuchtigkeit im Reifungsraum und dem Gehalt an freiem Wasser in der Rohwurst während der Reifung. Der Verderb eines Lebensmittels hängt nicht von dessen Gesamtwassergehalt, sondern vom Wert für die Wasseraktivität ab. Der Wert der Wasseraktivität ist ein Maß für jenes Wasser, das nicht an irgendwelche Strukturen im Lebensmittel fest gebunden ist (freies Wasser)so dass Mikroorganismen für das Wachstum zur Verfügung stehen. Reines Wasser hat einen a_{w}-Wert von 1,0. Steht kein freies Wasser zur Verfügung, beträgt der a_{w}-Wert 0. Frisches Fleisch besitzt einen a_{w}-Wert von ca. 0,99 und ist daher für Mikroorganismen besonders anfällig. Eine Dauerwurst (z. B. Salami) hat einen a_{w}-Wert von unter 0,85 und ist aus diesem Grund auch ohne Kühlung haltbar. Durch die Zugabe von Koch- bzw. Pökelsalz oder durch Trocknen, Brühen/Kochen, Braten/Backen und Pökeln der Produkte wird der a_{w}-Wert vermindert und das Produkt hygienisch sicherer.

Wenn z. B. Rohwurst durch einen a_{w}-Wert von 0,98 charakterisiert ist, dann steht sie im Gleichgewicht mit 98 % rel. Luftfeuchte (sog. Gleichgewichtsfeuchte).

Stehen beide o. g. Parameter im Ungleichgewicht zueinander (a_{w}-Wert und rel. Feuchte (%)), so bilden sie eine Triebkraft für den Wärme- und Stoffaustausch zwischen zwei Systemen (Stoff und Luftfeuchtigkeit) bis zum Gleichgewicht der Feuchtigkeit.

Das bedeutet u. a.:
- Masseverluste
- Verlust an Wärmeleitfähigkeit
- Erhöhter Energie- und Zeitbedarf
- Minimierter Stoffaustausch und Stofftransport
- Eingeschränkte Produktqualitätscharakteristik

Zusammenfassend ist festzuhalten, dass sich das erfindungsgemäße Verfahren durch folgende Merkmale oder Vorteile vom Stand der Technik unterscheiden kann:
- Einsatz von Aerosolen statt Wasserdampf
- Einsatz von Ultraschall-Generatoren statt Elektroverdampfer (andere Systeme sind denkbar)
- a_{w}-Wert des Produktes (Rohwurst etc.) wird als verfahrenstechnische Führungsgröße genutzt.
- Mit Aerosolen werden erstmals von Beginn des Reifevorganges an die bisher zu tolerierenden Ungleichgewichte (u. a. zu geringe Gleichgewichtsfeuchte, Verlust an Wärmeleitfähigkeit der Rohwurst) vermieden und beschleunigte Wärme- und Stofftransportvorgänge realisiert (beschleunigter Wärmetransport ins Innere durch Aufrechterhaltung der Wärmeleitfähigkeit). Dergleichen wird durch die Aerosole eine Erhöhung der Wärmeleitfähigkeit erreicht (hohe Gleichgewichtsfeuchte), sodass ein beschleunigter Wärmetransport durch die Außenhülle bzw. den Darm hindurch gewährleistet werden kann.
- Optimierte (und beschleunigte) fermentative Prozesse während der Reifung als Folge einer gesteuerten, produktspezifischen Gleichgewichtsfeuchte bei den entsprechenden Temperaturen
- Energetische Optimierung durch Verzicht auf Verdampfen (verminderter CO₂ Foot Print)
- Hygiene-Beherrschung von Prozessen und Produkten
- Verminderter Wasserverbrauch
- Premiumqualität der Produkte konstant zugänglich

Vorteile bei dem Einsatz von Aerosolen bestehen hinsichtlich folgender Punkte:
1. Einhaltung in der ersten Phase der Reifung der hohe rel. Luftfeuchtigkeit:
   - Beim Einsatz vom Wasserdampf muss energetisch immer wieder, nach jedem Einbringen vom Wasserdampf, ein Kühlschritt eingebaut werden. Das bedeutet sehr hohe Schwankungen in der rel. Luftfeuchtigkeit. Ein Auskondensieren auf der Oberfläche vom Produkt und auch an den Oberflächen der Räumlichkeiten ist nicht zu vermeiden. Ein recht tropisches Klima wird künstlich erzeugt, welches energetisch und hygienisch einen großen Nachteil darstellt.
   - Bei dem Einbringen der Aerosole ist die rel. Luftfeuchtigkeit und Temperatur wesentlich genau zu steuern. Da der immer wiederkehrende Kühlprozess bei dem Stand der Technik vermieden wird, ist eine genauere Prozesssteuerung ein sehr wichtiger und notwendiger Parameter.
   - Aerosole tragen zur massiven Wärmeleitfähigkeit bei und ermöglichen eine schnellere Angleichung der Temperatur im Produkt. Somit wird der Reifebeginn beschleunigt und die z. B. Microkokken oder Staphylokokken können die Umrötephase und Geschmacksausbildung schneller starten.
2. Einhaltung in der zweiten Phase der Reifung die rel. Luftfeuchtigkeit und Temperatur:
   - Aerosole tragen auch durch die massive Wärmeleitfähigkeit, nachdem der erste Schritt abgeschlossen ist, zur schnelleren pH-Wertabsenkung bei. Unerwünschte Mikroorganismen werden von den zugesetzten Milchsäurebakterien unterdrückt und ermöglichen auch hier eine bessere Prozesssteuerung. Mit diesem Schritt wird auch eine schnellere Gelbildung und damit eine feste Struktur erzeugt.
   - Bei dem Einsatz von Aerosolen wird das sonst tropische Klima bei dem derzeitigen Stand der Technik vermieden. Hygienische sowie prozesstechnische Vorteile sind hier als wesentlicher Punkt zu nennen. Das heißt, Probleme mit Hefen und Schimmel werden in dieser Phase besser kontrolliert und der prozessnotwendige Schritt bei Räucherware kann aufgrund einer trockeneren Produktoberfläche effektiver umgesetzt werden.
   - Aerosole tragen ebenso zum Abtransport, durch die Abstimmung zwischen a_{w}-Wert und rel. Luftfeuchtigkeit, der Feuchtigkeit auf der Oberfläche bei.

Weitere zusammengefasste Vorteile zum Einsatz von Aerosolen statt Wasserdampf:
- Bessere Beherrschung der Hygiene während des Reifeprozesses
- Energetische aufwendige Kühlprozesse werden verringert bzw. vermieden.
- Einhaltung der Temperatur und rel. Luftfeuchtigkeit, welches die Schlüsselparameter für einen gezielte Fermentationsprozess sind, können wesentlich besser gesteuert werden.
- Energetisch kostenintensive Druckluft kann vermieden werden.
- Energetisch kostenintensiver Wasserdampf kann vermieden werden.
- Temperaturanforderungen zum Prozess können wesentlich besser gesteuert und gehalten werden.
- Reduzierung vom Wasserverbrauch und damit Optimierung vom Abwasserverbrauch
- Räucherprozesse können wesentlich effektiver und energetisch vorteilhafter gestaltet werden.
- Energetische Optimierung durch Verzicht auf Verdampfen, Kühlen und Druck (CO2-Foot-Print)
- Reduzierung von Verbauung bei Anlagenumgestaltung von Hardware
- Durch Verkürzung vom Prozess gestaltet sich eine Verbesserung von möglicher Logistik und Liquidität.
- Vereinfachung der Wartung und Reinigung von Anlagen
- Interne Parameter und externe Parameter können besser im Einklang durch Verbesserung der Prozesssteuerung gebracht werden.
- Auf energetisches wie betriebswirtschaftliches Gegeneinanderarbeiten von Dampf und Kühlung, um die gewünschte rel. Luftfeuchtigkeit zu halten, kann verzichtet werden.
- Aerosole können mit konventioneller Rauchanwendung (Naturrauch) oder mit der Cleansmoke-Technologie kombiniert werden. Ebenso kann Cleansmoke, wie die Aerosole, über die beschriebenen Technologien regeneriert werden.

Das System kann für den Anwendungsbereich Rohwurstreifung folgende Eigenschaften aufweisen:
- Temperierung - Temperierung des Produktes zu Prozessbeginn
- Rauch - Rauchen zu jedem Prozessschritt möglich
- Beschickungsdicke - hohe Beschickungsdichte möglich
- Trocknungsgüte - keine Abhängigkeit von der Raumgeometrie
- Trocknungsgüte - geringe Luftströmgeschwindigkeiten von unter 1 m/sec werden realisiert für eine homogenere Trocknung.
- Kontinuierlicher Betrieb - Einsatz als Ein- oder Mehrkammeranlage für parallel oder quasikontinuierlichen Einsatz (auch in großen Räumen) möglich
- Gebäudebestand - Einbaumöglichkeit in vorhandene Räume
- Reinigung/Hygiene - einfacher Anlagenaufbau mit guter Zugänglichkeit aller Aggregate
- Planung - reprozierbarer Prozessverlauf über frei programmierbare Steuerung
- Energieeinsparung - Abhängig von den Betriebsbedingungen ist eine Einsparung bis zu 50 % im Vergleich zu herkömmlichen Systemen auf Basis von Heizen/Kühlen möglich.

Vorzugsweise kann vorgesehen sein, dass die Aerosole eine Tröpfchengröße von max. 45 µm aufweisen.

Ferner kann vorgesehen sein, dass die Aerosole eine Temperatur von max. 30° Celsius aufweisen.

Insbesondere kann vorgesehen sein, dass zur Erzeugung der Aerosole Düsentechnologie und/oder Ultraschall-Generatoren zum Einsatz kommen.

Ein weiterer Einsatzzweck kann dadurch gegeben sein, dass den Aerosolen Primärrauchkondensat (CleanSmoke) zugesetzt wird, um das Produkt zu räuchern und/oder zu konservieren.

Eine erfindungsgemäße Vorrichtung weist die Merkmale des Anspruchs 6 auf. Es ist demnach vorgesehen, dass die Vorrichtung einen Aerosolerzeuger aufweist, der dazu eingerichtet ist, dem Reiferaum während des Reifeprozesses Aerosole zur Erhöhung der relativen Luftfeuchtigkeit zuzuführen.

Der Aufbau solcher Vorrichtungen entspricht im Wesentlichen den aus dem Stand der Technik bekannten Vorrichtungen, wobei die Luftfeuchtigkeit statt mittels eines Verdampfers mit einer Einrichtung zum Erzeugen von Aerosolen bereitgestellt wird, beispielsweise mittels eines Ultraschall-Generators.

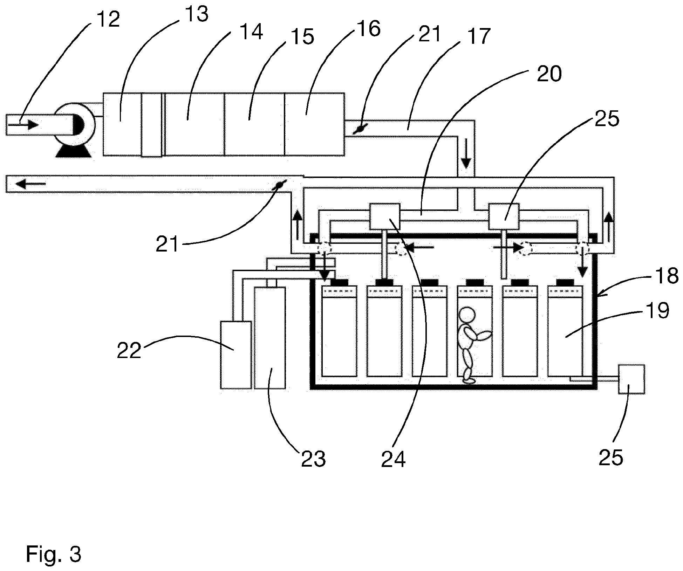

Der Aerosolerzeuger kann einfach in bestehende Anlagen integiert werden, sodass auch ein Umbau vorhandener Anlagen ohne weiteres möglich ist. Fig. 3 zeigt ein schematisches Ausführungsbeispiel einer solchen Anlage. Dabei wird Rohluft als Zuluft 12 zugeführt und anschließend durch einen Filter 13 geleitet. In einem anschließenden Vorkühler 14 erfolgt eine Vorentfeuchtung. Im nächsten Schritt erfolgt eine Entfeuchtung 15 und schließlich ist ein Dampfheizregister 16 vorgesehen. Die so erzeugte Prozessluft wird dann über Zuleitungen 17 in den Reiferaum 18 geleitet, in dem sich die zu reifenden Produkte z. B. in Reifeschränken 19 oder dergleichen befinden. Über Abluftleitungen 20 kann die Prozess-Abluft wieder aus dem Reiferaum 18 abgeleitet werden. Die Zufuhr bzw. Ableitung von Zu- bzw. Abluft kann über Ventile 21 gesteuert werden. In diesem Fall seitlich neben dem Reiferaum 18 sind eine Befeuchtungseinrichtung 22 und ein Raucherzeuger 23 angeordnet, mit Hilfe derer der Reiferaum 18 mit Luftfeuchtigkeit bzw. Rauch versorgt werden können. In der Befeuchtungseinrichtung 22 kann entsprechend auch der Aerosolgenerator angeordnet sein. Schließlich ist beispielhaft die Anordnung von Sensoren im Reiferaum 18 gezeigt, nämlich Feuchtigkeitssensoren 24 und Temperatursensoren 25. Auf eine Kühlung kann bei der erfindungsgemäßen Lösung verzichtet werden.

Als weitere Möglichkeiten für den Einsatz der Aerosol-Technologie in der Fleischwirtschaft wird der Einsatz in sog. CleanSmoke-Verfahren gesehen.

CleanSmoke ist die in jeder Hinsicht nachhaltige Alternative zum konventionellen Räuchern. Denn der Rauch ist gereinigt, bevor er mit Lebensmitteln in Kontakt kommt. Deshalb ist er frei von schädlichen Stoffen wie Asche, Teer und polyzyklischen aromatischen Kohlenwasserstoffen (PAKs). Dabei entsprechen Zeit, Temperatur, Feuchtigkeit und Umluftgeschwindigkeit den Bedingungen konventioneller Räucherprozesse. Deshalb bleiben auch so wichtige Eigenschaften wie Geschmack, Farbe oder Konservierung vollständig erhalten.

Für CleanSmoke müssen keine Bäume gefällt werden. Denn die unbehandelten Sägespäne fallen bei der Holzverarbeitung an. Danach verglimmen sie unter kontrollierten Bedingungen. Der entstandene Rauch wird in Trinkwasser auskondensiert und in einem mehrstufigen Verfahren gefiltert. Dabei wird er von Asche, Teer und den krebserregenden polyzyklischen aromatischen Kohlenwasserstoffen (PAKs) gereinigt. Übrig bleibt reines Rauchkondensat, welches in Trinkwasser gelöst ist. Mit Hilfe von Raucherzeugern entsteht aus dem Kondensat stabiler Rauch zum Räuchern.

In Deutschland wird CleanSmoke derzeit bei etwa 10 Prozent der geräucherten Lebensmittel angewendet. Dadurch reduzieren sich die Treibhausgasemissionen um 8 Prozent und der Energieverbrauch um 7,2 Prozent. Ein konsequenter Wechsel zu CleanSmoke kann die Umweltbelastungen und den Ressourcenverbrauch deutlich vermindern.

Das Einsparpotenzial liegt allein in Deutschland bis zu 73.000 Tonnen CO₂-Äquivalenten. Dazu kommen knapp 500.000 m³ Wasser und 600 Millionen kWh Energie. Außerdem überzeugt das Verfahren beim Verbrauch von Ressourcen (Holz, fossile Brennstoffe) und Reinigungsmitteln in den Räuchereien. Insgesamt besitzt die CleanSmoke das Potenzial, die Umweltbelastungen bei der Fleischproduktion um etwa 55 Prozent zu senken.

### Bezugszeichenliste:

- 10: Luftfeuchtigkeit
- 11: Temperatur
- 12: Zuluft
- 13: Filter
- 14: Vorkühler
- 15: Entfeuchtung
- 16: Dampfheizregister
- 17: Zuleitung
- 18: Reiferaum
- 19: Reifeschrank
- 20: Abluftleitung
- 21: Ventil
- 22: Befeuchtungseinrichtung
- 23: Raucherzeuger
- 24: Feuchtigkeitssensor
- 25: Temperatursensor

## Patentansprüche

1. Verfahren zur Reifung von Rohwurst und/oder Rohschinken, wobei das zu reifende Produkt, insbesondere Rohwurst und/oder Rohschinken, in einen Reiferaum verbracht und dort über eine vorgegebene Zeit zu vorgegebenen Bedingungen gereift wird, wobei wenigstens die Temperatur und die relative Luftfeuchtigkeit im Reiferaum für die Zeit der Reifung des Produkts im Reiferaum gesteuert und/oder geregelt wird, **dadurch gekennzeichnet, dass** dem Reiferaum während des Reifeprozesses Aerosole zur Erzielung der zur Reifung vorgegebenen (relativen) Luftfeuchtigkeit zugeführt werden.

2. Verfahren nach Anspruch 1, **dadurch gekennzeichnet, dass** die Aerosole eine Tröpfchengröße von max. 45 µm aufweisen.

3. Verfahren nach Anspruch 1 oder 2, **dadurch gekennzeichnet, dass** die Aerosole eine Temperatur von max. 30° Celsius aufweisen.

4. Verfahren nach Anspruch 1 oder einem der anderen vorhergehenden Ansprüche, **dadurch gekennzeichnet, dass** zur Erzeugung der Aerosole Düsentechnologie und/oder Ultraschall-Generatoren zum Einsatz kommen.

5. Verfahren nach Anspruch 1 oder einem der anderen vorhergehenden Ansprüche, **dadurch gekennzeichnet, dass** den Aerosolen Primärrauchkondensat (CleanSmoke) zugesetzt wird, um das Produkt zu räuchern und/oder zu konservieren.

6. Vorrichtung zur Reifung von Rohwurst und/oder Rohschinken, mit einem Reiferaum zur Aufnahme des zu reifenden Produkts, insbesondere Rohwurst und/oder Rohschinken, wobei der Reiferaum dazu eingerichtet ist das Produkt über eine vorgegebene Zeit zu vorgegebenen Bedingungen zu reifen, und mit einer Steuerungseinrichtung zur Steuerung wenigstens der Temperatur und der relativen Luftfeuchtigkeit im Reiferaum für die Zeit der Reifung des Produkts im Reiferaum, **dadurch gekennzeichnet, dass** die Vorrichtung einen Aerosolerzeuger aufweist, der dazu eingerichtet ist, dem Reiferaum während des Reifeprozesses Aerosole zur Erhöhung der relativen Luftfeuchtigkeit zuzuführen.

7. Vorrichtung nach Anspruch 6, **dadurch gekennzeichnet, dass** der Aerosolerzeuger durch einen Ultraschall-Generator gebildet ist und/oder dass Düsentechnologie zum Einsatz kommt.

8. Vorrichtung nach Anspruch 6 oder 7, **dadurch gekennzeichnet, dass** die Vorrichtung keine Kühlung aufweist.

## Geänderte Patentansprüche

### Geänderte Patentansprüche gemäss Regel 137(2) EPÜ.

1. Verfahren zur Reifung von Rohwurst und/oder Rohschinken, wobei das zu reifende Produkt, insbesondere Rohwurst und/oder Rohschinken, in einen Reiferaum verbracht und dort über eine vorgegebene Zeit zu vorgegebenen Bedingungen gereift wird, wobei wenigstens die Temperatur und die relative Luftfeuchtigkeit im Reiferaum für die Zeit der Reifung des Produkts im Reiferaum gesteuert und/oder geregelt wird, **dadurch gekennzeichnet, dass** dem Reiferaum während des Reifeprozesses Aerosole auf Wasserbasis zur Erzielung der zur Reifung vorgegebenen (relativen) Luftfeuchtigkeit zugeführt werden.

2. Verfahren nach Anspruch 1, **dadurch gekennzeichnet, dass** die Aerosole eine Tröpfchengröße von max. 45 µm aufweisen.

3. Verfahren nach Anspruch 1 oder 2, **dadurch gekennzeichnet, dass** die Aerosole eine Temperatur von max. 30° Celsius aufweisen.

4. Verfahren nach Anspruch 1 oder einem der anderen vorhergehenden Ansprüche, **dadurch gekennzeichnet, dass** zur Erzeugung der Aerosole Düsentechnologie und/oder Ultraschall-Generatoren zum Einsatz kommen.

5. Verfahren nach Anspruch 1 oder einem der anderen vorhergehenden Ansprüche, **dadurch gekennzeichnet, dass** den Aerosolen Primärrauchkondensat zugesetzt wird, um das Produkt zu räuchern und/oder zu konservieren.

6. Vorrichtung zur Reifung von Rohwurst und/oder Rohschinken, mit einem Reiferaum zur Aufnahme des zu reifenden Produkts, insbesondere Rohwurst und/oder Rohschinken, wobei der Reiferaum dazu eingerichtet ist das Produkt über eine vorgegebene Zeit zu vorgegebenen Bedingungen zu reifen, und mit einer Steuerungseinrichtung zur Steuerung wenigstens der Temperatur und der relativen Luftfeuchtigkeit im Reiferaum für die Zeit der Reifung des Produkts im Reiferaum, **dadurch gekennzeichnet, dass** die Vorrichtung einen Aerosolerzeuger aufweist, der dazu eingerichtet ist, dem Reiferaum während des Reifeprozesses Aerosole auf Wasserbasis zur Erhöhung der relativen Luftfeuchtigkeit zuzuführen.

7. Vorrichtung nach Anspruch 6, **dadurch gekennzeichnet, dass** der Aerosolerzeuger durch einen Ultraschall-Generator gebildet ist und/oder dass Düsentechnologie zum Einsatz kommt.

8. Vorrichtung nach Anspruch 6 oder 7, **dadurch gekennzeichnet, dass** die Vorrichtung keine Kühlung aufweist.
